Europäisches Patentamt

**European Patent Office**

**Office européen des brevets**

(11) Veröffentlichungsnummer : **0 035 042**
**B1**

(12) **EUROPÄISCHE PATENTSCHRIFT**

(45) Veröffentlichungstag der Patentschrift :
**16.02.83**

(21) Anmeldenummer : **80100982.0**

(22) Anmeldetag : **28.02.80**

(51) Int. Cl.³ : **A 61 C 13/22**

(54) **Steckriegel zur Verriegelung einer abnehmbaren Zahnersatzprothese mit einem im Kiefer festsitzenden Teil des Zahnersatzes.**

(43) Veröffentlichungstag der Anmeldung :
**09.09.81 Patentblatt 81/36**

(45) Bekanntmachung des Hinweises auf die Patenterteilung : **16.02.83 Patentblatt 83/07**

(84) Benannte Vertragsstaaten :
**AT BE FR GB IT NL**

(56) Entgegenhaltungen :
**CH A 505 615**
**FR A 1 066 607**
**US A 3 344 522**

(73) Patentinhaber : **Gabriel, Wolfgang**
**Ostallee 17**
**D-5500 Trier (DE)**

(72) Erfinder : **Gabriel, Wolfgang**
**Ostallee 17**
**D-5500 Trier (DE)**

(74) Vertreter : **Schönherr, Wolfgang et al**
**Hawstrasse 28**
**D-5500 Trier (DE)**

Jouve, 18, rue St-Denis, 75001 Paris, France

Steckriegel zur Verriegelung einer abnehmbaren Zahnersatzprothese mit einem im Kiefer festsitzenden Teil des Zahnersatzes

Die Erfindung betrifft einen Steckriegel zur Verriegelung einer abnehmbaren Zahnersatzprothese mit einem im Kiefer festsitzenden Teil des Zahnersatzes, bestehend aus einem in der Zahnersatzprothese eingebetteten Riegelgehäuse, in dem ein Riegelbolzen verschiebbar gelagert ist, dessen eines aus dem Riegelgehäuse ausschiebbares Ende bei aufgesetzter Zahnersatzprothese in eine Ausnehmung einer am festsitzenden Teil befestigten Halterung greift.

Es sind Steckriegel in verschiedenen Ausführungsformen bekannt, die dazu dienen, eine abnehmbare Zahnersatzprothese am im Kiefer festsitzenden Teil des Zahnersatzes festzuhalten. Durch Verschieben eines solchen Steckriegels läßt sich die Verriegelung lösen, so daß die Zahnersatzprothese vom Kiefer abgenommen werden kann.

Bei den bekannten Steckriegeln dieser Art besteht einmal der Nachteil, daß sie sehr genau gearbeitet sein müssen, wenn die Zahnersatzprothese sicher festsitzen soll. Ein genauer Paßsitz ergibt jedoch einen hohen Reibungswiderstand, der die Beweglichkeit des Riegelbolzens erschwert und bei längerem Gebrauch durch Abnutzungserscheinungen nachläßt.

Bei einem anderen bekannten Steckriegel (US-A-1 008 028) ist der Riegelbolzen geschlitzt, wodurch sein durch eine Brücke in einen Zahn einsteckbares vorderes Ende gespreizt ist und sich beim Einstecken des Riegelbolzens federnd in seine Führung anlegt.

Dieser Steckriegel hat jedoch den Nachteil, daß bei eingestecktem Riegelbolzen ständig ein Druck auf den Zahn, in den er ragt, ausgeübt wird und daß der Riegelbolzen ganz aus seiner Halterung herausgezogen werden kann, wodurch er leicht verloren geht.

Aufgabe der Erfindung ist es daher, einen Steckriegel der eingangs genannten Art zu schaffen, der auch bei häufigem Gebrauch einen guten Paßsitz gewährleistet, ohne daß eine überhohe Präzisionsarbeit bei der Herstellung notwendig ist.

Zur Lösung dieser Aufgabe ist der Steckriegel nach der Erfindung dadurch gekennzeichnet, daß der Riegelbolzen einen umlaufenden elastischen Kragen aufweist, der sich an der Innenwandung des Riegelgehäuses abstützt.

Nach einer vorteilhaften Ausführungsform weist der Riegelbolzen eine umlaufende Ringnut auf, in der ein Federring angeordnet ist, dessen den Riegelbolzen überragender Abschnitt sich an der Innenwandung des Riegelgehäuses abstützt. Der Federring ist dabei vorzugsweise lösbar am Riegelbolzen angeordnet.

Nach einer bevorzugten Ausführungsform ist die von der Halterung des festsitzenden Teiles abgewandte Stirnseite des Riegelgehäuses lösbar mit dem Gehäusezylinder, in dem der Riegelbolzen verschiebbar ist, verbunden, und bei entriegelter Stellung ist die Innenfläche der Stirnseite als Anschlag für den Kragen des Riegelbolzens ausgebildet.

Nach einer weiteren Ausführungsform ist in der Innenwandung des Riegelgehäuses eine Ringnut angeordnet, in die bei verriegelter Stellung der elastische Kragen des Riegelbolzens greift.

Die Erfindung ist anhand der Zeichnungen in Ausführungsbeispielen dargestellt. Es zeigen :

Figur 1 einen Steckriegel in verriegelter Stellung im Schnitt,

Figur 2 den Steckriegel nach Fig. 1 in entriegelter Stellung,

Figur 3 eine andere Ausführungsform des Steckriegels in verriegelter Stellung im Schnitt,

Figur 4 den Steckriegel nach Fig. 1 in Draufsicht bei aufgesetzter Zahnersatzprothese.

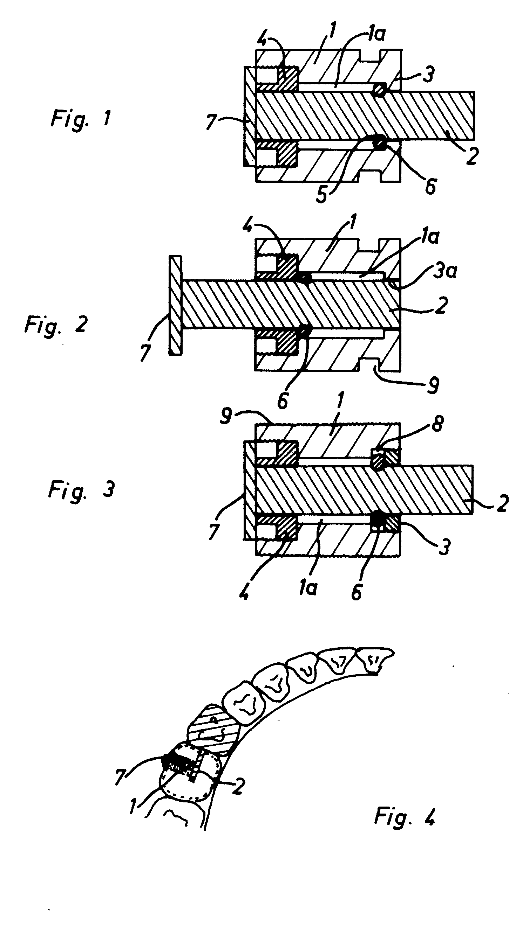

Der Steckriegel nach den Fig. 1 bis 3 besteht aus einem Riegelgehäuse 1, das in seiner Längsrichtung einen zylindrischen Hohlraum 1a aufweist, in dem ein Riegelbolzen 2 verschiebbar angeordnet ist. Das Riegelgehäuse 1 weist an seinem einen Ende eine Stirnwand 3 mit einer Durchtrittsöffnung 3a auf, die dem Querschnitt des Riegelbolzens 2 entspricht. Die andere Stirnseite 4 ist in das Riegelgehäuse 1 einschraubbar und weist ebenfalls eine Durchtrittsöffnung auf, die dem Querschnitt des Riegelbolzens 2 entspricht.

Der Riegelbolzen 2 hat etwa in seiner Mitte eine umlaufende Nut 5, in der ein Federring 6 gehalten ist. An einem Ende des Riegelbolzens 2 sitzt eine Anschlagplatte 7.

Wie aus den Fig. 1 bis 3 zu erkennen ist, liegt der Federring 6 des Riegelbolzens 2 bei verriegelter Stellung an der Innenseite der Stirnseite 3 an. Ebenso liegt die Anschlagplatte 7 an der Außenseite der Stirnseite 4 an, so daß der Verriegelungsbolzen nicht weiter ausschiebbar ist.

Zum Entriegeln des Steckriegels wird der Riegelbolzen 2 mit Hilfe der Anschlagplatte 7 verschoben, bis die Stellung von Fig. 1 nach Fig. 2 erreicht ist. Nunmehr liegt der Federring 6 an der Innenseite der Stirnwand 4, und der Riegelbolzen 2 überragt die Stirnseite 3 des Riegelgehäuses 1 nicht mehr. Während des Verschiebens stützt sich nur der Federring 6 an der Innenwandung des Gehäuses ab, während der übrige Teil des Riegelbolzens 2 mit der Gehäuseinnenwandung nicht in Berührung kommt. Da der Federring 6 elastisch ist, ist stets ein guter Paßsitz gewährleistet. Sollte sich der Federring 6 nach häufigem Gebrauch abnutzen, so läßt er sich durch einen neuen Federring ersetzen. Hierzu ist es nur notwendig, die Stirn-Seite 4 aus dem Riegelgehäuse 1 herauszuschrauben, um den Riegelbolzen 2 ganz herauszuziehen und den Federring aus der Ringnut 5 nehmen zu können.

Der Federring 6 hat somit einmal die Aufgabe, die Führung des Riegelbolzens 2 zu bewirken und zum anderen durch Anschlag der Stirnseite 4 ein unbeabsichtigtes Herausziehen des Riegelbolzens nach der einen oder anderen Seite zu verhindern.

Bei der Ausführungsform nach Fig. 3 ist nahe der Stirnseite 3 eine Ringnut 8 im Riegelgehäuse 1 vorgesehen, die erlaubt, daß sich der Federring 6 entspannt, wenn der Riegelbolzen 2 in verriegelter Stellung ist. Hierdurch wird auch eine Arretierung des Riegelbolzens 2 in verriegelter Stellung erreicht, die eine unbeabsichtigte Entriegelung verhindert.

Damit das Riegelgehäuse 1 in der abnehmbaren Zahnersatzprothese einen festen Sitz hat, ist es an seiner Außenseite mit Einkerbungen 9 o. dgl. versehen.

## Ansprüche

1. Steckriegel zur Verriegelung einer abnehmbaren Zahnersatzprothese mit einem im Kiefer festsitzenden Teil des Zahnersatzes, bestehend aus einem in der Zahnersatzprothese eingebetteten Riegelgehäuse (1), in dem ein Riegelbolzen (2) verschiebbar gelagert ist, dessen eines aus dem Riegelgehäuse ausschiebbares Ende bei aufgesetzter Zahnersatzprothese in eine Ausnehmung einer am festsitzenden Teil befestigten Halterung greift, dadurch gekennzeichnet, daß der Riegelbolzen (2) einen umlaufenden elastischen Kragen (6) aufweist, der sich an der Innenwandung des Riegelgehäuses (1) abstützt.

2. Steckriegel nach Anspruch 1, dadurch gekennzeichnet, daß der Riegelbolzen (2) eine umlaufende Ringnut (5) aufweist, in der ein Federring (6) angeordnet ist, dessen den Riegelbolzen (2) überragender Abschnitt sich an der Innenwandung des Riegelgehäuses (1) abstützt.

3. Steckriegel nach Anspruch 2, dadurch gekennzeichnet, daß der Federring (6) lösbar am Riegelbolzen (2) angeordnet ist.

4. Steckriegel nach Anspruch 1, dadurch gekennzeichnet, daß die von der Halterung des festsitzenden Teiles abgewandte Stirnseite (4) des Riegelgehäuses (1) lösbar mit dem Gehäusezylinder, in dem der Riegelbolzen (2) verschiebbar ist, verbunden ist und daß bei entriegelter Stellung die Innenfläche der Stirnseite (4) als Anlage für den Kragen (6) des Riegelbolzens ausgebildet ist.

5. Steckriegel nach einem der Ansprüche 1 bis 4, dadurch gekennzeichnet, daß in der Innenwandung des Riegelgehäuses (1) eine Ringnut (8) angeordnet ist, in die bei verriegelter Stellung der elastische Kragen (6) des Riegelbolzens (2) einrastet.

## Claims

1. A clamp for clamping a removable part of a dental prosthesis to that part of the dental prosthesis which is seated firmly in the jaw, comprising a clamp housing (1), which is embedded in the dental prosthesis, and in which a clamping pin (2) is mounted so as to be displaceable, one end of which pin can be pushed out from the clamp housing, with the dental prosthesis superimposed, to engage into a recess of a holder fastened to the firmly-seated part of the prosthesis, characterised in that the clamping pin (2) has an encircling elastic collar (6) which is supported against the inner wall of the clamp housing.

2. A clamp as claimed in claim 1, characterised in that the clamping pin (2) has an encircling annular groove (5) in which a spring ring (6) is arranged, whose portion projecting beyond the clamping pin (2) is supported against the inner wall of the clamp housing (1).

3. A clamp as claimed in claim 2, characterised in that the spring ring (6) is arranged releasably on the clamping pin (2).

4. A clamp as claimed in claim 1, characterised in that the front end (4) of the clamp housing (1), which is remote from the holder of the firmly-seated part, is connected releasably to the housing cylinder in which the clamping pin (2) is displaceable, and in that, in the unlocked position, the inner surface of the front end (4) is designed as an abutment for the collar (6) of the clamping pin.

5. A clamp as claimed in one of claims 1 to 4, characterised in that arranged in the inner wall of the clamp housing (1) is an annular groove (8) into which, in the clamped position, the elastic collar (6) of the locking bolt (2) engages.

## Revendications

1. Verrou à douille pour verrouiller une prothèse dentaire amovible par rapport à une partie de celle-ci noyée dans la résine, ce verrou comprenant un corps de verrou (1) ajusté dans la prothèse dentaire et dans lequel peut coulisser un axe de verrouillage (2) dont une extrémité pouvant émerger du corps de verrou (1), lorsque la prothèse est placée en bouche, se loge dans une cavité formée dans un élément d'ancrage de ladite partie noyée dans la résine, ce verrou étant caractérisé en ce que ledit axe de verrouillage (2) comporte une collerette rotative élastique et annulaire (6) qui prend appui contre la paroi interne du corps de verrou (1).

2. Le verrou à douille selon la Revendication 1, caractérisé en ce que l'axe de verrou (2) comporte d'une part un jonc annulaire rotatif (6) dont la section qui émerge radialement sur la surface de l'axe de verrouillage (2) vient porter contre la paroi interne du corps de verrou (1), et d'autre part une tête plate extérieure de butée (7).

3. Le verrou à douille selon la Revendication 2, caractérisé en ce que le jonc élastique (6) est monté de façon amovible sur l'axe de verrouillage (2).

4. Le verrou à douille selon la Revendication 1, caractérisé en ce que la paroi frontale (4) du corps de verrou (1) opposée à l'ancrage de la partie bloquée est accouplée de façon amovible au cylindre formé par ledit corps (1) où coulisse l'axe de verrouillage (2), et que, dans la position déverrouillée, la surface interne de ladite paroi frontale (4) sert de butée à la collerette (6) de l'axe de verrouillage.

5. Le verrou à douille selon l'une quelconque des revendications 1 à 4, caractérisé en ce qu'il est prévu dans la paroi interne du corps de verrou (1) une gorge annulaire (8) dans laquelle peut faire saillie la collerette élastique (6) de l'axe de verrouillage (2) lorsque ce dernier est en position de verrouillage.

Fig. 1

Fig. 2

Fig. 3

Fig. 4